# EUROPEAN PATENT SPECIFICATION

(11) **EP 1 714 695 B1**
(45) Date of publication and mention of the grant of the patent: **23.06.2010**
(21) Application number: 06112689.2
(22) Date of filing: 18.04.2006
(51) Int. Cl.: B01J 19/00

(54) **Automated compound synthesis system and method**
Automatisierte Syntheseeinrichtung und Verfahren
Appareil automatisé pour synthèse de composés et procédé

(30) Priority: 18.04.2005 US 672476 P
(43) Date of publication of application: 25.10.2006
(73) Proprietor: Asahi Kasei Bioprocess, Inc., Glenview, IL 60025 (US)
(72) Inventor: Bellafiore, Louis, Wilmette, IL 60091 (US); Walker, John, Evanston, Illinois 60201 (US); Sanderson, James, Chicago, Illinois 60647 (US)
(74) Representative: Tetaz, Franck Claude Edouard

(56) References cited:
- WO-A-97/07126
- US-A- 2 865 402
- US-A- 4 597 412
- US-A- 4 703 913
- US-A- 4 704 256
- US-A- 5 137 695
- US-A- 5 192 269
- US-A- 5 803 105

## Description

### BACKGROUND OF THE INVENTION

The present invention relates generally to automated synthesis systems that enable the laboratory, pilot or commercial scale synthesis of biological or biologically active compounds, such as peptides and oligonucleotides.

The combination of building-block components (e.g. amino acids, amidites) to create compounds with specific properties is widely used to create pharmaceutical, biopharmaceutical, veterinary, agricultural, nutraceutical, cosmetic and other fine chemical products. In general these compounds are of high value and may be used at low dosage levels to produce desired effects.

Automated synthesis systems provide many advantages over performing these frequently lengthy and detailed processes manually. Examples of prior art automated synthesis systems are presented in U.S. Patent Nos. 5,641,459 to Holmberg and 5,807,525 to Allen et al. By using an automated system, each synthesis step can be more precisely monitored, controlled and reproduced. This automation reduces costs associated with reagent and building-block materials by more efficiently utilizing them and results in higher yields of desired product at lower cost. Operational costs are also reduced including labor and facility costs. In addition, validation and quality control costs to confirm synthetic product makeup and disposal costs of non-compliant product is reduced. Increased ability to meet time critical delivery whether for clinical trials or commercial product can eliminate the costs of such delays which can be in the range of millions of dollars per week. The benefit of the improved process reproduciblity is seen both from a regulatory (FDA) perspective where cGMP guidelines mandate a state of control be maintained throughout manufacturing processes, as well as from a manufacturing science view which predicts the lowest cost of manufacture and highest quality products results from processes which exhibit the least run to run variability. A further benefit of such reproducible processes is that multiple smaller scale runs can be made to generate material on an "as needed" basis, rather than making large scale single batches at high risk in the case of failure and the resulting stockpiling of material, which decomposes over time.

A high degree of accuracy and reproducibility for the additions of each building block and reagent is vital. Quality management directives call for increased synthesis step accuracy for industrial processes that are used to create commercial products. Indeed, Six Sigma quality control principles demonstrate that lower variability in an industrial process results in a greater percentage of higher quality products being produced by that process.

It is well known, however, that even with available automated systems these types of syntheses generate crude product material that have highly variable amounts of product and impurities, mandating extensive post-process purifications and reduced product recovery. The effectiveness of the developed purification strategy is further compromised with the variable product feeds that result from poorly controlled syntheses.

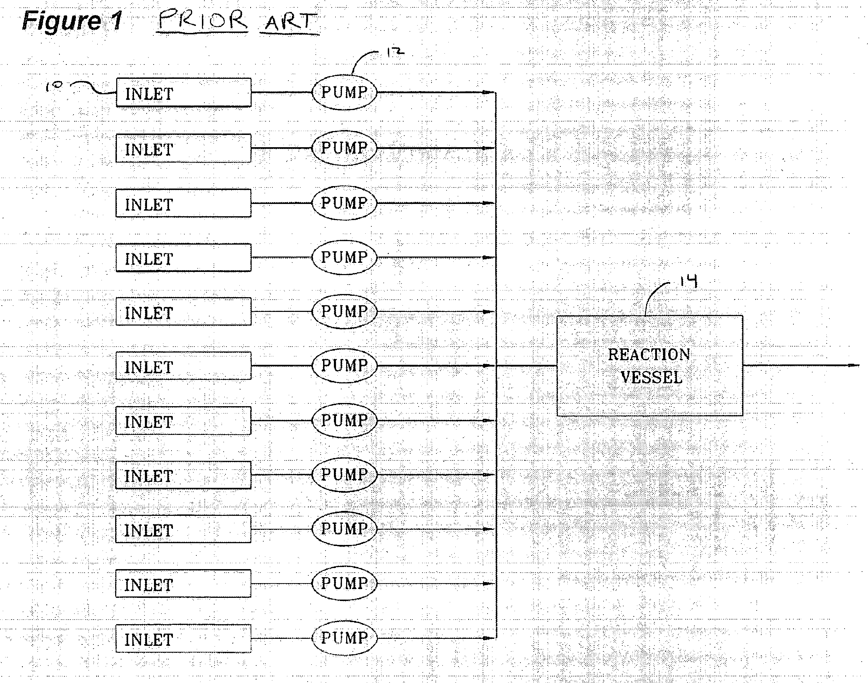

Fig. 1 illustrates a prior art approach to synthesis that has been widely used from bench scale to large scale production. Feedstocks, supplied from containers or tanks, are each connected to inlets 10 and delivered through a dedicated flow path, typically via pumps 12, to a reaction vessel 14. Each flow path usually includes a diaphragm valve (not shown in Fig. 1). The diaphragm valves are positioned in front of each pump if pumps are present. Such an arrangement is used for solution phase synthesis (additions create a "soup" of building blocks and reagents), stirred solid phase synthesis (a solid particle with the starting building block attached becomes part of a "soup" of building blocks and reagents) or flow-through solid phase synthesis (the particles are held in place in a tube with screen/frit supports and the reactants are passed through).

PCT application WO 97/07126 illustrates another prior art approach for multi-stage solid-phase synthesis. In such document is proposed an apparatus comprising an inlet module with a manifold for providing different types of building blocks to a reaction vessel and with a flow meter. Such inlet module is connected to an activator reservoir through a mixing valve, such that building blocks and the activator may be fed to the reaction vessel.
Moreover, the apparatus described in this document comprises a second inlet module with a manifold connected to reservoirs comprising components to be fed to the reaction vessel in other steps of the synthesis.

### SUMMARY OF THE INVENTION

The present invention is directed to accurate laboratory, pilot and commercial scale synthesizer systems and a method of use according to the claims.

The following detailed description of embodiments of the invention, taken in conjunction with the appended claims and accompanying drawings, provide a more complete understanding of the nature and scope of the invention.

### BRIEF DESCRIPTION OF THE DRAWINGS

Fig. 1 is a flow diagram illustrating a prior art approach to synthesis of biologically active compounds such as peptides and oligonucleotides;
Fig. 2 is a flow diagram illustrating an embodiment of the synthesizer system of the present invention;
Fig. 3 is a detailed flow diagram of one of the inlet modules of the system of Fig. 2;
Fig. 4 is a perspective view of an embodiment of the synthesizer system of the present invention mounted on a cart;
Fig. 5 is an enlarged perspective view of one of the zero static inlet valve clusters of Figs. 2 and 3.

### DESCRIPTION OF THE PREFERRED EMBODIMENTS

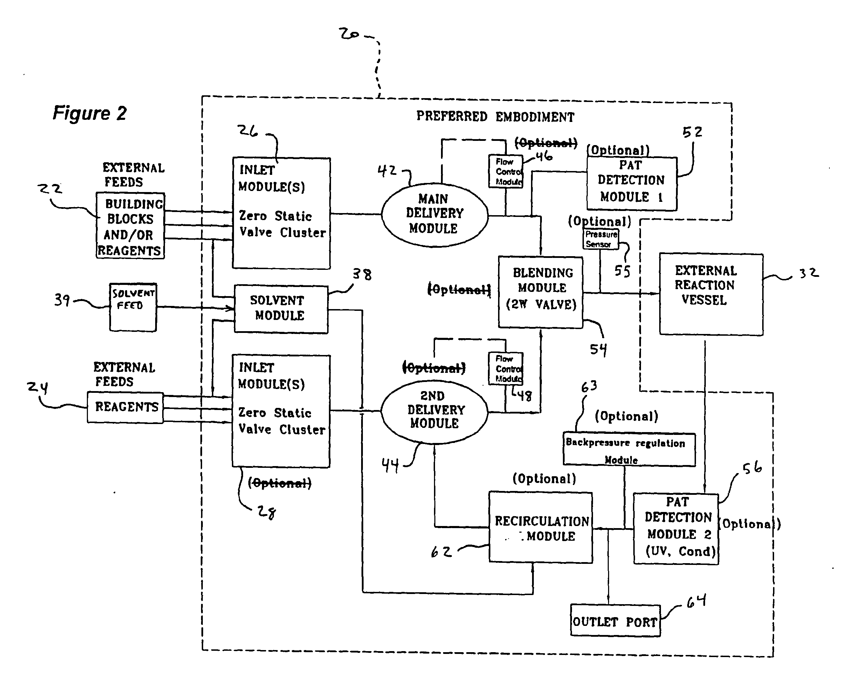

With reference to Fig. 2, an embodiment of the biosynthesis system of the present invention is indicated at 20. User-supplied building block components in solution (e.g. amino acids or amidites) 22 and liquid reagents 24 are connected to the appropriate inlet modules 26 and 28 to permit their sequential additions in order to synthesize the target biomolecule (e.g. peptide or oligonucleotide) in the external reaction vessel 32. The synthesis is achieved by the system 20 by delivering the building block components and reagents to the reaction vessel at controlled flow rates and/or volumes in a specific sequence. Two or more inlet modules may be included on one biosynthesis system; the exact number of inlets being dependent on the total number of building blocks and reagents required for the synthesis of the biomolecule (e.g. peptide or oligonucleotide) of interest.

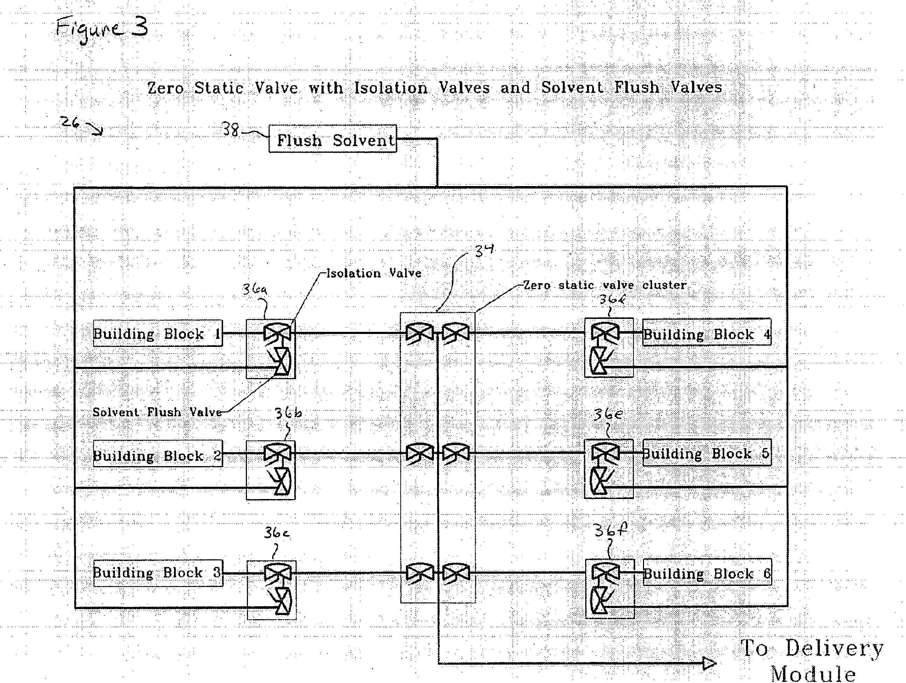

In accordance with the present invention, the inlet modules each consist of multiple valves arranged appropriately to reduce the possibility of building block or reagent carryover when changing from one inlet feed to another. More specifically, in accordance with the present invention, each inlet module 26 or 28 features one or more diaphragm valve manifolds, each consisting of a multi-port zero static diaphragm valve configuration, indicated at 34 in Fig. 3 for inlet module 26, in order to maximize the reduction in building block/reagent carryover. It should be noted that while the manifold 34 of Fig. 3 shows six valves, manifolds featuring any number of valves more than one are contemplated by the present invention.

Each inlet module is connected to the system controller. The appropriate inlet valve is opened by the system controller according to which of the connected liquid building block components or reagents is required for a given step in the synthesis sequence.

As illustrated in Fig. 3, the inlet module, indicated in general at 26, may also include additional diaphragm valves 36a-36f upstream of the manifold assembly 34 to permit solvent flushing of the valve manifold and lines to make them free of the added component after the addition of the building block or reagent is complete. Flush solvent is provided by supply 38 (illustrated in Figs. 2 and 3) which receives solvent from solvent feed 39 (Fig. 2).

Additional diaphragm isolation valves 36a-36f upstream of the manifold assembly may also be included to further isolate the building blocks/reagents from cross-contamination with another feed.

Once the appropriate inlet valve has been opened by the controller, a delivery module, illustrated at 42 and 44 in Fig. 2, that includes an appropriate pump, is activated to permit delivery of the feed liquid to the external reaction vessel 32. A main pump is dedicated to selectively delivering all building block components as well as reagents (e.g. amino acids, amidites, etc.) to the reaction vessel module. A second pump is dedicated to reagent additions. In the preferred embodiment illustrated in Fig. 2, both a main pump (in main delivery module 42) and a second pump (in 2^{nd} delivery module 44) are of a sanitary design to reduce carryover such as provided with a sanitary Lewa diaphragm design pump. Additionally, the use of the triplex or 5-head pumps provide a reduction of delivery pulsations to the synthesis bed to minimize possible flow or pressure related disruption of the bed during synthesis steps.

Flow-control modules 46 and 48 are located downstream of the main pump and second pump modules. The flow-control modules incorporate mass flow meters to accurately measure and control the addition of building block components and reagents to the reaction vessel, via control of the main and 2^{nd} delivery modules 42 and 44, in respect to flow rate and totalized volume of each addition.

The flow meters are interfaced with the system controller. The outputted signal from the flow meter(s) of the flow-control module, which is typically an analog signal, provides the controller with a Process Value (PV). A Set Point (SP) will have been set in the controller by the user via a user interface (such as a PC). Based on the discrepancy between the measured PV and the user-defined SP, the controller continually adjusts the signal that is sent to the pump motors of the main and 2^{nd} delivery modules 42 and 44.

Additional details regarding a suitable controller system may be obtained from commonly owned U.S. 7 072 742.

As indicated in Fig. 2, a PAT detection module 52 may be optionally positioned downstream of one of the delivery modules (in the illustrated example, main delivery module 42) and flow control modules 46 and 48. A sensor within the PAT detection module 52 communicates the composition of the incoming liquid stream to the controller. More specifically, the outputted signal from the sensor of the PAT detection module, which is typically analog, provides the controller with a Process Value (PV). A Set Point (SP) will have been set in the controller by the user via a user interface. Based on the discrepancy between the measured PV and the user-defined SP, the controller's program will compare the PV to the SP, and if a deviation outside of the user-defined tolerance is measured, then an alarm is activated and the liquid is not delivered to the reaction vessel in order to prevent the synthesis of an incorrect biomolecule.

The PAT detection module 52 may utilize different sensor types. For example, an ionic (e.g. conductivity or pH for a salt solution) and spectral (e.g. near-infrared or ultraviolet-VIS for organic solutions) measurement of the liquid, as appropriate, may be made by an in-line sensor. The PAT detection module 52 may alternatively use a range of sensor types including NIR, conductivity, temperature, pH, etc. Basically any sensor that can detect properties of the critical (and/or variable) feed and outputs a measurable signal may be used. Examples of other suitable sensors include fixed or variable wavelength near infrared or ultraviolet sensors (such as those manufactured by Wedgewood, Foss, Custom Sensors, Optek and Knauer), and conductivity sensors (such as those manufactured by TBI Bailey and Wedgewood).

A blending module 54 permits in-line convergence and blending of the two liquid streams coming from the main and 2^{nd} delivery modules, specifically a building block component and a reagent, while they are being delivered to the reaction vessel 32. For example, a building block component may need to be activated by a reagent in order for the building block to chemically link to the starting component or partially completed molecule in the reaction vessel. The blending module permits in-line blending of the two liquids within the biosynthesis system to preclude the need for pre-mixing the liquids offline. The blending module includes two-way valving and a static mixer to enhance mixing. The two-way valving allows streams from just main delivery module 42 or 2^{nd} delivery module 42 to be blended or streams from both delivery modules to be blended.

The liquid or liquids that pass through the blending module 54 are directed into the external reaction vessel 32. In solid phase synthesis, the reaction vessel contains the resin upon which the biomolecule (e.g. oligonucleotide or peptide) is built. It can use a flow-through design or a stirred-bed reactor design in which stirrer(s) mix the suspended resin and additions.

An optional pressure sensor 55 is positioned between the blending module 54 and the reaction vessel 32 and regulates the delivery of liquid to the reaction vessel so that a uniform pressure may be maintained in reaction vessel 32.

A second PAT detection module 56 may optionally be incorporated downstream of the reaction vessel for biosynthesis systems that incorporate flow-through reaction vessels. This module includes the same types of sensors used by the first PAT detection module 52 such as ionic (e.g. conductivity) and/or spectral (e.g. near-infrared or ultraviolet-VIS) detectors which can detect the composition of the liquid stream passing through the reaction vessel and communicate it to a controller. A control strategy can be used to advance to subsequent steps based on the measured make-up of the effluent from the reaction vessel which can indicate the completeness of reaction due to consumption of reagent or building block and the resulting change in sensor output signal. Such a strategy can include the implementation and control of re-circulation steps via optional recirculation module 62 which can be continued until full utilization of these high value added reactants is complete.

The system optionally features a backpressure regulation module 63 which maintains a uniform pressure in the reaction vessel 32.

Recirculation module 62 may feature its own pump or may just feature valving and tubing to use the pumps of the main or 2^{nd} delivery modules or a single system pump. As illustrated in Fig. 2, recirculation module 62 may also selectively receive solvent from solvent module 38 and circulate it through the system and out outlet port 64 so that the recirculation system may be directly flushed.

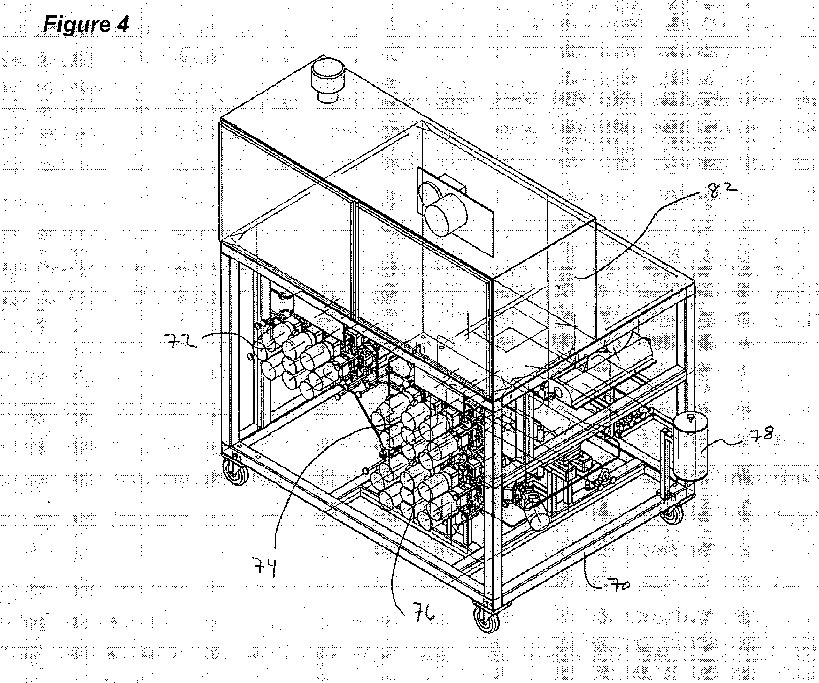

Fig. 4 shows an embodiment of the system of the present invention mounted on a cart 70. The system of Fig. 4 features three inlet modules 72, 74 and 76. Each inlet module features a manifold having nine diaphragm valves facing the front side of the cart that are visible in Fig. 4. In addition, each manifold features horizontally-opposed isolation and flush valves facing the back side of the cart that receive solvent, as described with respect to Fig. 3 of the application. The external reaction vessel 78 is optionally attached to the cart 70. A cabinet 82 is positioned on top of the cart and houses the system controller and other electronics.

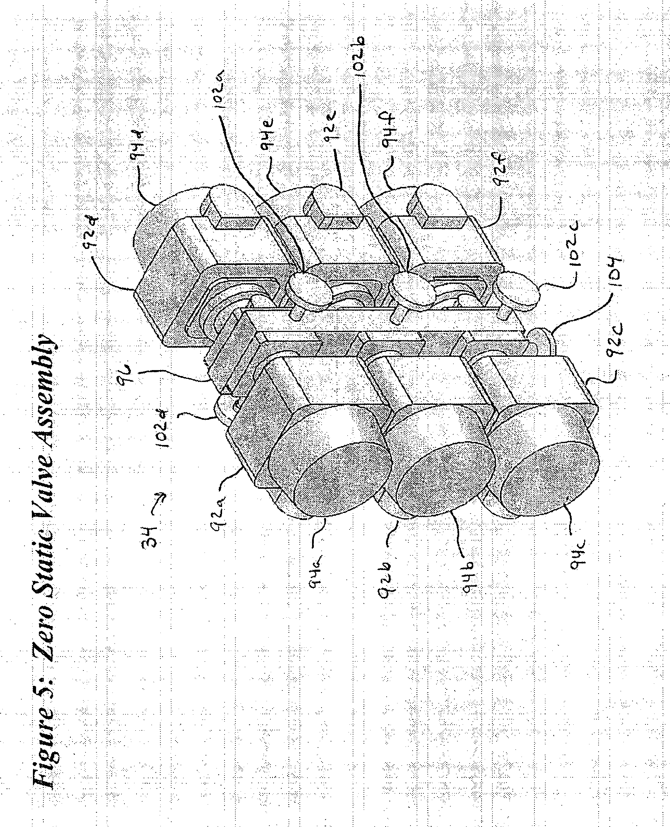

An enlarged view of a manifold constructed in accordance with the present invention is indicated in general at 34 in Fig. 5 (and corresponds to manifold 34 of Fig. 3). The six zero static diaphragm valves 92a-92f of the manifold each is optionally equipped with a valve status indicator with feedback 94a-94f (such as a proximity switch). The manifold body is indicated at 96 and four of the six valve inlet ports are illustrated at 102a-102d (valve inlet ports 102e and 102f are horizontally opposed from ports 102b and 102c but hidden from view in Fig. 5). The valve outlet port is illustrated at 104. While one outlet is illustrated, the manifold may have more than one outlet.

The embodiments of the system of the present invention described above may be used for solution phase synthesis (additions create a "soup" of building blocks and reagents), stirred solid phase synthesis (a solid particle with the starting building block attached becomes part of a "soup" of building blocks and reagents) or flow-through solid phase synthesis (the particles are held in place in a tube with screen/frit supports and the reactants are passed through).

## Claims

1. An automated compound synthesis system comprising:
• a first inlet module (26) featuring a manifold (34) having an outlet and a plurality of diaphragm valves, each of said diaphragm valves consisting a multipart zero static diaphragm valve configuration and having an inlet in communication with an external feed (22) of a building block or reagent;
• a main delivery module (42) in communication with the outlet of the manifold (34) of the inlet module (26) and adapted to receive a feed stream therefrom, said delivery module further in communication with a reaction vessel (32) and comprising a main pump adapted to deliver the feed stream to the reaction vessel (32);
• a second inlet module (28) featuring a second manifold having an outlet and a plurality of diaphragm valves, each of said diaphragm valves consisting in a multipart zero static diaphragm valve configuration and having an inlet in communication with an external feed of a reagent;
• a second delivery module (44) in communication with the outlet of the manifold of the second inlet module (28) and adapted to receive a feed stream therefrom, said second delivery module (44) further in communication with the reaction vessel (32) and comprising a second pump adapted to deliver the feed stream to the reaction vessel (32);
• a system controller connected to the first and second inlet modules said system controller being adapted to open the appropriate diaphragm valve according to which of the connected building block components or reagents is required, the system controller being further connected to the main and second pumps,
• a first flow control module (46) in circuit between the main delivery module (42) and the reaction vessel (32) and comprising flow meters adapted to measure and control additions of building blocks or reagent to the reaction vessel (32); said flow meters being interfaced with the system controller,
• a second flow control module (48) in circuit between the second delivery module (44) and the reaction vessel (32), and comprising flow meters adapted to measure and control additions of building blocks or reagent to the reaction vessel (32) through the blending module (54), said flow meters having interfaced with the system controller
• a blending module (54) comprising a two way valving and a static mixer in circuit between the flow control modules (46, 48) and the reaction vessel (32) for blending the feed stream before delivery to the reaction vessel (32), said feed streams being from just main delivery modul (42), from just the second delivery module (44), or from both delivery modules.

2. The synthesis system of claim 1, further comprising a process analytical technology detection module positionned (52) downstream one of the delivery modules (42, 44) and flow control modules (46; 48), wherein said detection module (52) comprises a sensor adapted for detecting composition of the feed stream from the delivery module (42; 44), said sensor being in communication with the controller.

3. The synthesis system of claim 1, wherein the inlet module (26) further includes additional solvent diaphragm valves (36a-36f) upstream of the manifold (34), said solvent diaphragm valves being adapted to permit solvent flushing of the valve manifold and lines to make them free of the added component after the building block or reagent is complete.

4. The synthesis system of claim 3, wherein the inlet module (26) further includes additional isolation diaphragm valves (36a-36f) upstream of the manifold (34), said isolation diaphragm valves being adapted to further isolate the building blocks or reagents from cross-contamination with another feed.

5. The synthesis system of claim 1, wherein the reaction vessel (32) is a flow-through reactor.

6. A method of synthesizing compounds in a laboratory pilot, or commercial scale using a synthesis system according to claims 1 to 5.

## Patentansprüche

1. Automatisierte Verbindungssyntheseeinrichtung, umfassend:
ein erstes Einlassmodul (26), das einen Verteiler (34) mit einem Auslass und einer Vielzahl von Membranventilen aufweist, wobei jedes Membranventil eine totvolumenarme Mehrkanal-Membranventilkonfiguration besitzt und einen Einlass aufweist, der in Verbindung mit einer externen Einspeisung (22) eines Synthesebausteins oder eines Reagenz steht;
ein Hauptfördermodul (42), das in Verbindung mit dem Auslass des Verteilers (34) des Einlassmoduls (26) steht und dafür angepasst ist, einen Einspeisestrom von diesem zu erhalten, wobei das Fördermodul des Weiteren in Verbindung mit einem Reaktionsgefäß (32) steht und eine Hauptpumpe aufweist, die dafür angepasst ist, den Einspeisestrom zu dem Reaktionsgefäß (32) zu fördern;
ein zweites Einlassmodul (28), das einen zweiten Verteiler mit einem Auslass und einer Vielzahl von Membranventilen aufweist, wobei jedes Membranventil eine totvolumenarme Mehrkanal-Membranventilkonfiguration besitzt und einen Einlass aufweist, der in Verbindung mit einer externen Einspeisung eines Reagenz steht;
ein zweites Fördermodul (44), das in Verbindung mit dem Auslass des Verteilers des zweiten Einlassmoduls (28) steht und dafür angepasst ist, einen Einspeisestrom von diesem zu erhalten, wobei das zweite Fördermodul (44) des Weiteren in Verbindung mit dem Reaktionsgefäß (32) steht und eine zweite Pumpe aufweist, die dafür angepasst ist, den Einspeisestrom zu dem Reaktionsgefäß (32) zu fördern;
ein Systemsteuergerät, dass mit dem ersten und dem zweiten Einlassmodul verbunden ist, wobei das Systemsteuergerät dafür angepasst ist, das passende Membranventil in Übereinstimmung mit den verbundenen und benötigten Synthesebausteinkomponenten oder Reagenzien zu öffnen, und wobei das Systemsteuergerät des Weiteren mit der Hauptpumpe und der zweiten Pumpe verbunden ist,
ein erstes Flusssteuermodul (46), das zwischen dem Hauptfördermodul (42) und dem Reaktionsgefäß (32) angeordnet ist und Flussmesser aufweist, die dafür angepasst sind, Zusätze von Synthesebausteinen oder einem Reagenz zu dem Reaktionsgefäß (32) zu messen und zu steuern; wobei die Flussmesser mit dem Systemsteuergerät gekoppelt sind,
ein zweites Flusssteuermodul (48), das zwischen dem zweiten Fördermodul (44) und dem Reaktionsgefäß (32) angeordnet ist und Flussmesser aufweist, die dafür angepasst sind, Zusätze von Synthesebausteinen oder einem Reagenz zu dem Reaktionsgefäß (32) durch das Mischmodul (54) zu messen und zu steuern, wobei die Flussmesser mit dem Systemsteuergerät gekoppelt sind,
ein Mischmodul (54), das ein 2-Wege-Ventil und einen statischen Mixer aufweist, das zwischen dem Flusssteuermodul (46, 48) und dem Reaktionsgefäß (32) angeordnet ist, zum Mischen des Einspeisestroms, bevor dieser dem Reaktionsgefäß (32) zugeführt wird, wobei die Einspeiseströme lediglich vom Hauptfördermodul (42), von dem zweiten Fördermodul (44) oder von beiden Fördermodulen stammen.

2. Syntheseeinrichtung nach Anspruch 1, des Weiterem umfassend ein prozessanalytisches Erfassungsmodul (52), das stromabwärts von einem der Fördermodule (42, 44) und den Flusssteuermodulen (46, 48) angeordnet ist, wobei das Erfassungsmodul (52) einen Sensor aufweist, der dafür angepasst ist, die Zusammensetzung des Einspeisestroms von dem Fördermodul (42, 44) zu erfassen, und wobei der Sensor mit dem Steuergerät in Verbindung steht.

3. Syntheseeinrichtung nach Anspruch 1, wobei das Einlassmodul (26) des Weiteren zusätzliche Lösungsmittelmembranventile (36a-36f) stromaufwärts des Verteilers (34) umfasst, wobei die Lösungsmittelmembranventile dafür angepasst sind, dass Spülen des Ventilverteilers und der Leitungen mit Lösungsmittel zu erlauben, um diese von der zugefügten Komponente zu befreien, nachdem der Synthesebaustein oder das Reagenz vollständig ist.

4. Syntheseeinrichtung nach Anspruch 3, wobei das Einlassmodul (26) des Weiteren zusätzliche Isoliermembranventile (36a-36f) stromaufwärts des Verteilers (34) umfasst, wobei die Isoliermembranventile dafür angepasst sind, die Synthesebausteine oder Reagenzien weiter von einer Fremdkontamination mit einer weiteren Einspeisung zu isolieren.

5. Syntheseeinrichtung nach Anspruch 1, wobei das Reaktionsgefäß (32) ein Durchflussreaktor ist.

6. Verfahren zum Synthetisieren von Verbindungen in einem Labormaßstab, Versuchsmaßstab oder kommerziellen Maßstab unter Verwendung einer Syntheseeinrichtung gemäß den Ansprüchen 1 bis 5.

## Revendications

1. Système automatisé de synthèse de composés comprenant :
. un premier module d'entrée (26) équipé d'un collecteur (34) comportant une sortie et une pluralité de vannes à membrane, chacune desdites vannes à membrane consistant en une configuration de vanne à membrane zéro statique multivoie et comportant une entrée en communication avec une source externe (22) d'un synthon ou réactif ;
. un module de distribution principal (42) en communication avec la sortie du collecteur (34) du module d'entrée (26) et adapté pour recevoir un flux d'alimentation de celui-ci, ledit module de distribution étant en outre en communication avec une cuve de réaction (32) et comprenant une pompe principale adaptée pour délivrer le flux d'alimentation à la cuve de réaction (32) ;
. un deuxième module d'entrée (28) équipé d'un deuxième collecteur comportant une sortie et une pluralité de vannes à membrane, chacune desdites vannes à membrane consistant en une configuration de vanne à membrane zéro statique multivoie et comportant une entrée en communication avec une source externe d'un réactif ;
. un deuxième module de distribution (44) en communication avec la sortie du collecteur du deuxième module d'entrée (28) et adapté pour recevoir un flux d'alimentation de celui-ci, ledit deuxième module de distribution (44) étant en outre en communication avec la cuve de réaction (32) et comprenant une deuxième pompe adaptée pour délivrer le flux d'alimentation à la cuve de réaction (32) ;
. un dispositif de commande de système relié aux premier et deuxième modules d'entrée, ledit dispositif de commande de système étant adapté pour ouvrir la vanne à membrane appropriée en fonction du composé de synthon ou du réactif nécessaire parmi les composés de synthons ou les réactifs reliés, le dispositif de commande de système étant en outre relié à la pompe principale et à la deuxième pompe ;
. un premier module de contrôle de débit (46) dans le circuit entre le module de distribution principal (42) et la cuve de réaction (32) et comprenant des débitmètres adaptés pour mesurer et contrôler les ajouts de synthons ou de réactif dans la cuve de réaction (32), lesdits débitmètres étant interfacés avec le dispositif de commande de système ;
. un deuxième module de contrôle de débit (48) dans le circuit entre le deuxième module de distribution (44) et la cuve de réaction (32) et comprenant des débitmètres adaptés pour mesurer et contrôler les ajouts de synthons ou de réactif dans la cuve de réaction (32) par l'intermédiaire du module de mélange (54), lesdits débitmètres étant interfacés avec le dispositif de commande de système ;
. un module de mélange (54) comprenant une vanne à deux voies et un mélangeur statique dans le circuit entre les modules de contrôle de débit (46, 48) et la cuve de réaction (32) pour mélanger le flux d'alimentation avant sa distribution à la cuve de réaction (32), ledit flux d'alimentation provenant uniquement du module de distribution principal (42), uniquement du deuxième module de distribution (44), ou des deux modules de distribution.

2. Système de synthèse selon la revendication 1, comprenant en outre un module de détection de technologie analytique de processus (52) positionné en aval de l'un des modules de distribution (42 ; 44) et des modules de contrôle de débit (46 ; 48), dans lequel ledit module de détection (52) comprend un capteur adapté pour détecter la composition du flux d'alimentation provenant du module de distribution (42 ; 44), ledit capteur étant en communication avec le dispositif de commande.

3. Système de synthèse selon la revendication 1,
dans lequel le module d'entrée (26) comprend en outre des vannes à membrane de solvant (36a à 36f) supplémentaires en amont du collecteur (34), lesdites vannes à membrane de solvant étant adaptées pour permettre l'injection de solvant dans le collecteur à vannes et les conduites pour les débarrasser du composé ajouté une fois que le synthon ou le réactif est achevé.

4. Système de synthèse selon la revendication 3,
dans lequel le module d'entrée (26) comprend en outre des vannes à membrane d'isolement (36a à 36f) supplémentaires en amont du collecteur (34), lesdites vannes à membrane d'isolement étant adaptées pour isoler en outre les synthons ou les réactifs d'une contamination croisée avec une autre alimentation.

5. Système de synthèse selon la revendication 1,
dans lequel la cuve de réaction (32) est un réacteur à flux continu.

6. Procédé de synthèse de composés à une échelle de laboratoire, pilote ou commerciale en utilisant un système de synthèse selon les revendications 1 à 5.
